# EUROPEAN PATENT APPLICATION

(11) **EP 0 845 896 A1**
(43) Date of publication of application: **03.06.1998**
(21) Application number: 97308978.2
(22) Date of filing: 07.11.1997
(51) Int. Cl.: H04M 11/00

(54) **Remote data access by telephone**

(30) Priority: 29.11.1996 GB 9624960; 29.05.1997 US 865488
(71) Applicant: NORTHERN TELECOM LIMITED, Montreal, Quebec H2Y 3Y4 (CA)
(72) Inventor: Clifforth, Andrew Edward, Ipswich, Suffolk IP1 4BD (GB); Burnhill, Stephen Edward, Cwmbran, Torfaen NP44 7NX, Wales (GB)
(74) Representative: Ryan, John Peter William

(57) **Abstract**

Remote data access method relies on recognition of predetermined calling line identities, by an interface unit 57. Upon recognition, the interface unit sends back data to the calling party from a data source such as a utility meter. Such meter readings are returned to a server 51. The server 51 may poll many different households by telephone. The interface unit 57 is arranged to intercept meter reading calls without the telephone ringing in the household. The system needs no changes to be made to the exchange in the telephone network.

## Description

### Field of the Invention

The present invention relates to methods of remotely accessing data, to systems for remotely accessing data, to interface units, and to devices for remotely accessing data.

### Background to the Invention

It is known to access data at remote locations using the telephone network. In particular, it is known to access databases, control and monitor household equipment, and send video data by telephone. Another particular application is in reading meters such as utility meters, which may be regarded as household equipment or business equipment. Reading meters by sending meter readings automatically by telephone has a number of advantages: meters can be accessed at any time without the need for staff to visit the premises, readings can be more frequent, limited only by the capacity to process the data, and special one-off readings are easy to arrange.

From a customer's viewpoint there is less inconvenience in making arrangements for personal access, and it becomes easier to switch between suppliers of a given utility to take advantage of different tariffs. Also so-called "Special Reads" eg for when people move house, can be made more easily.

These advantages come at the expense of providing further equipment in the home to link the meter to the household telephone line, or more often to a dedicated line. Normally, the existing household line is used to minimise inconvenience to the household, meter reading calls are made into the home, not initiated from the home, to avoid billing to the household telephone bill. Also, meter reading calls will be terminated as soon as the householder picks up the telephone to make a call. Finally, to avoid disturbing the householder, no-ring calls are made, ie the interface to the meter recognises meter reading calls without any ringing taking place.

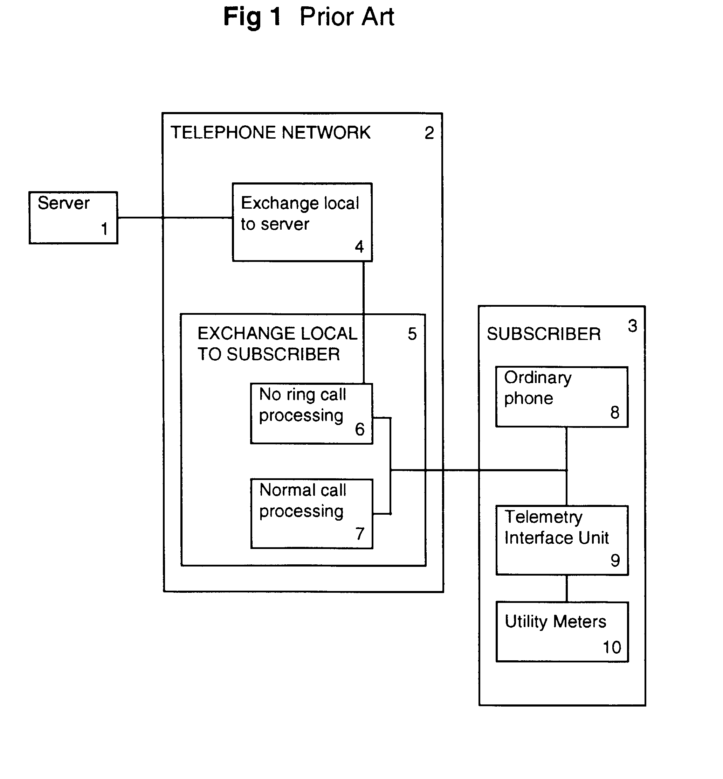

Such a system is summarised in figure 1 in schematic form. A meter reading server 1 is connected to the telephone network 2, to enable it to make meter reading calls to a subscriber 3. Such calls pass via a local exchange 4, then through the network to an exchange 5 local to the subscriber, which connects the call with the subscriber. To enable no-ring processing, a special card 6 is provided, for no-ring call processing. At the exchange, outputs from this card are combined with outputs from a line card 7 for processing normal calls. The additional card enables different alerting tones to be sent to the subscriber, to enable equipment at the subscriber end to distinguish between no-ring meter calls, and normal telephone calls. A telemetry unit 9 answers only the no-ring calls, and transmits readings from meters 10. The ordinary phone 8 can be used as normal, unaffected by the meter reading transmission equipment and calls.

An example of such a system is disclosed in British Telecom Suppliers Information notes SIN 236, issue 1, March 1995 (service description and SIN 237, issue 1, March 1995.

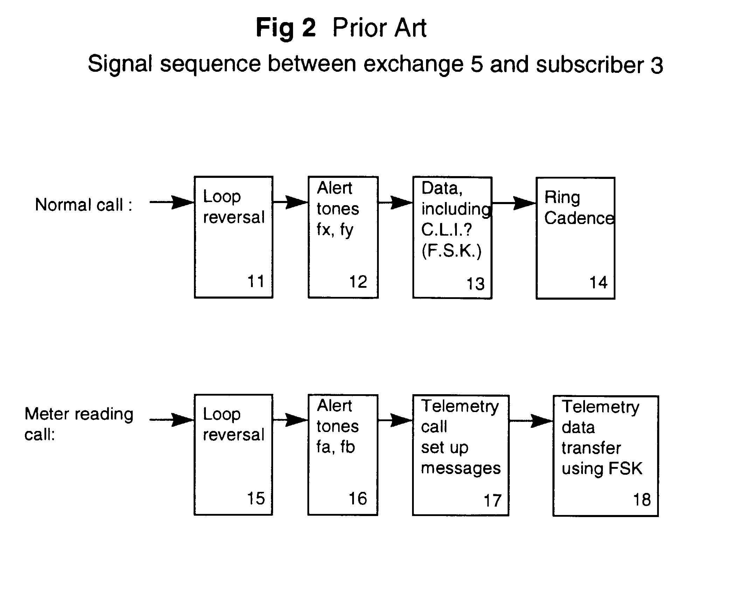

As shown in figure 2, a normal call using British Telecom standards includes a loop reversal stage 11, followed by alert tones fx and fy at step 12, for a given period, then data transmission in FSK form at step 13, maybe including calling line identity information. Finally, ring cadences occur at step 14.

For a no-ring meter reading call, different alerting tone frequencies fa, fb, are transmitted to the subscriber at step 16, following the usual loop reversal. At step 17 call set-up messages will be exchanged between the local exchange 5 and the telemetry interface unit 9. This is followed by telemetry data transfer from the interface unit to the local exchange using FSK (frequency shift keying) at step 18.

The system described enables the advantages of no-ring calls to be achieved for reading meters. The network 2 may be arranged to transmit calling line identity information at the time of setting up the call. In this case, the normal call processing card 7 of figure 1 would be arranged to transmit the CLI data.

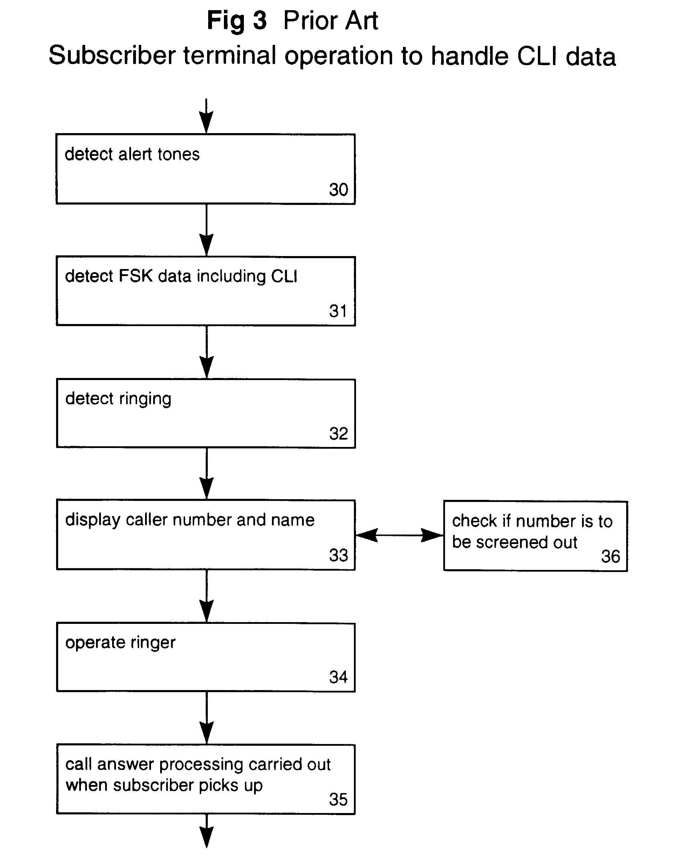

The handling of the CLI data at the subscriber terminal exemplified by the ordinary phone 8 in figure 1, is shown in figure 3.

At step 30, the terminal detects alert tones. The FSK data including the CLI is detected at step 31, and the ring cadence is detected at step 32. Caller number and name may be displayed if the terminal has a display, at step 33. Another feature which may use the CLI information is call screening. At step 36, the terminal may check if the calling line number is to be screened out. As appropriate, the ringer is operated at step 34, and answering of the call is carried out when the subscriber picks up at step 35.

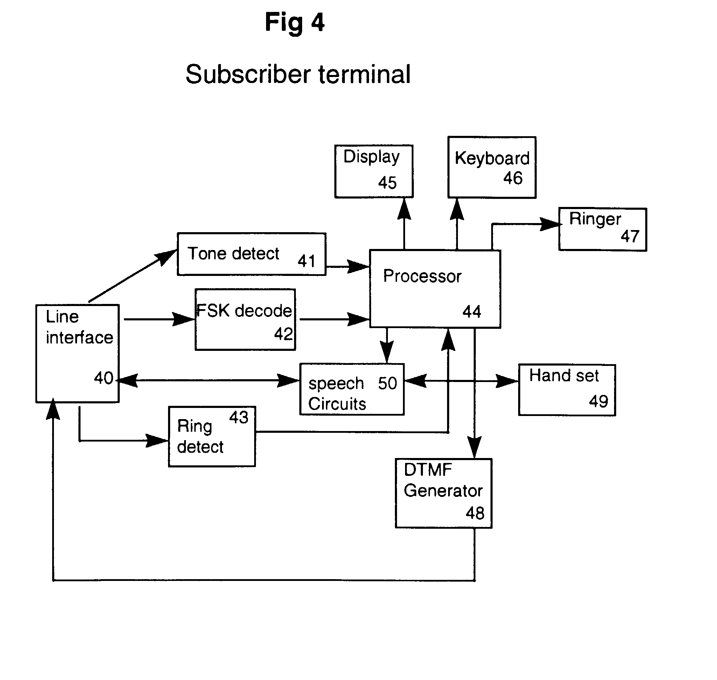

Figure 4 shows in schematic form features of a conventional subscriber terminal such as the ordinary phone 8 of figure 1. An example of such a terminal is the C9316 designed and manufactured by Nortel. A line interface 40 interfaces with the line to the exchange. Tone detect circuitry 41 is provided for detecting the alert tone. FSK decoding is carried out by part 42. Ring cadence detection is carried out by part 43. The latter 3 parts feed a processor 44 which controls a display 45, a keyboard 46, and a ringer 47. A DTMF generator is provided for outputting dialling tones. The handset 49 has a link to speech circuitry 50, controlled by the processor 44, and, under the control of the processor 44, may output speech signals directly to the line interface, and may receive speech signals directly from the line interface.

Such a terminal is capable of being adapted for use with various different signal sequence formats by changing the firmware of the processor 44. Figure 2 shows a British Telecom specification CLI system. There are other well known CLI protocols, such as the CATV protocol, ETSI protocols, and the Belcore protocol.

The meter reading system shown in figure 1 is not easily adaptable for use with exchanges using protocols other than British Telecom protocols, and is inflexible once installed, because changes would require modifications at the local exchange.

### Summary of the Invention

According to the invention, there is provided a method of remotely accessing data using a telephone network and an interface unit connecting the telephone network to a source of the data, the telephone network being arranged to send calling line identity information, the method comprising the steps of:
initiating a telephone call from a calling party to the interface unit;
detecting the calling line identity at the interface unit; and
using the interface unit to transmit the data from the source to the calling party in response to the detected calling line identity.

By making the data transmission dependent on CLI information, security is enhanced, no modifications are necessary at the switch, and the system is easy to adapt for use with different CLI protocols.

Advantageously, the method also comprises the step of answering the call using the interface unit, wherein the data transmitting step is carried out within the same call. Normally, CLI information is transmitted while the receiver is on-hook. Answering the call and sending the data in the same call facilitates rapid data transmission and enables it to be carried out with minimal equipment at the data source end. The cost of the telephone call can be borne by the calling party, rather than the end user.

Advantageously, ringing is prevented when the call is answered. If ringing is prevented, calls can be made without disturbance to anyone at the data source end. Calls can be made at any time of day or night. This may be particularly useful for calls to domestic premises.

Advantageously, the data is transmitted from the interface unit to the network using DTMF tones. The use of DTMF tones enables extremely reliable transmission with minimal additional equipment at the data source end. Compatibility with ASDI which also uses DTMF may enable the method to be used with ASDI based systems.

Advantageously, the calling party comprises a central server, and a plurality of data sources are accessed using different telephone calls in sequence from the calling party. A central server may quickly access data from widely separated locations securely and with inexpensive and standard, general availability equipment.

Advantageously, the data relates to household equipment. Where the data relates to household equipment, monitoring of such equipment may be carried out remotely using inexpensive equipment, and with minimal disturbance to the occupants.

Advantageously, the source of the data comprises a utility meter. Utility meters need to be read periodically. This can now be done with inexpensive hardware, low running and transmission costs, and minimal disturbance to utility customers.

Advantageously, the data comprises data from a plurality of meters. Little additional hardware is required to read multiple meters at the same location using the same telephone line. Even the same call can be used, to minimise running costs.

Advantageously, the method also comprises the step of using the interface unit to count pulses from the meter, and the data transmitted comprises counts of the pulses. Having the interface unit count pulses enables it to be used with a wide range of meters. If the counts are transmitted without interpretation, then changes in meaning of the counts, such as changes in tariff, can be handled centrally. Thus the need to upgrade many interface units in the field can be avoided.

Advantageously, the interface unit is integrated into a telephone. Integrating the interface unit enables the amount of hardware to be minimised. This particularly important for the equipment at the data source side, for applications in which multiple data sources need to be accessed. For household use it is more convenient and costs may be reduced as some parts, such as microprocessor DTMF generator and CLI detection components may be used for two purposes to avoid duplication.

According to another aspect of the invention, there is provided a method of remotely accessing data using a telephone network and an interface unit connecting the telephone network to a source of the data, the network being arranged to send calling line identity information, the method comprising the steps of:
initiating a call from a calling party to the interface unit;
detecting the calling line identity at the interface unit;
transmitting the data to the calling party using DTMF tones, the data relating to household equipment.

Monitoring household equipment using DTMF tones to transmit the data enables a reliable system to be realised with low equipment costs and running costs.

According to another aspect of the invention there is provided a system for remotely accessing data using a telephone network having a calling line identity transmission facility, the system comprising:
a server for initiating a telephone call; and
an interface unit for transmitting the data to the server in response to the telephone call initiated by the server, wherein the interface unit comprises means for detecting calling line identity information relating to the server, and means for transmitting the data in response to the detection.

According to another aspect of the invention, there is provided an interface unit for transmitting data over a telephone network having a calling line identity transmission facility, the unit comprising:
means for receiving a telephone call over the network, from a calling party;
means for detecting if a calling line identity associated with the call corresponds to a predetermined calling line identity; and
means for transmitting data to the calling party according to the detection result.

According to another aspect of the invention there is provided a device for remotely accessing data relating to household equipment, transmitted by an interface unit, the device comprising:
means for initiating a telephone call to the household interface unit;
means for receiving the data in the form of DTMF tones transmitted by the interface unit; and
means for interpreting the data according to predetermined criteria.

Preferred features may be combined as appropriate, and may be combined with any of the aspects of the invention, as would be apparent to a man skilled in the art.

### Brief Description of the Drawings

For a better understanding of the invention, and how the same may be carried into effect, it will now be described by way of example with reference to the figures, in which:
Figure 1 shows a known meter reading arrangement;
Figure 2 shows known signal sequences between exchange and subscriber;
Figure 3 shows known subscriber terminal operation for handling CLI data;
Figure 4 shows a known subscriber terminal in schematic form;
Figure 5 shows a remote data access arrangement in schematic form, according to an embodiment of the invention;
Figure 6 shows method steps according to an aspect of the invention;

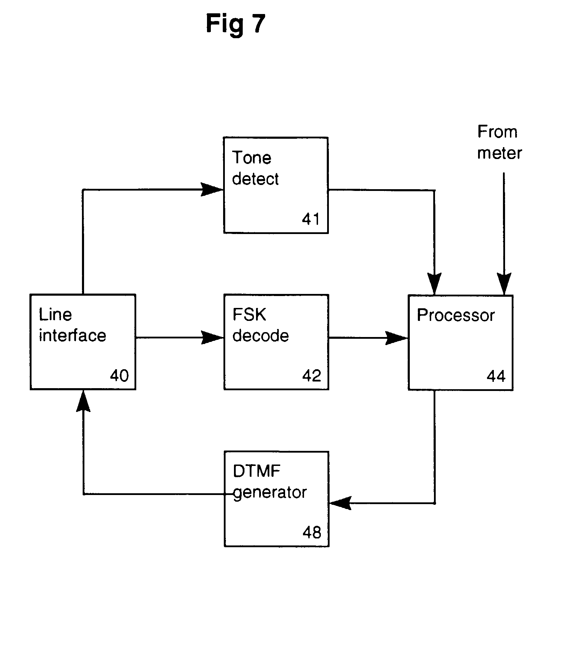

Figure 7 shows in schematic form an interface unit according to the invention;
Figure 8 shows connections between the interface unit and a meter;
Figure 9 shows in schematic form a server according to the invention;
Figure 10 shows in schematic form the data interpretation function of the server of figure 9; and
Figure 11 shows in schematic form another arrangement according to an embodiment of the invention.

### Detailed Description

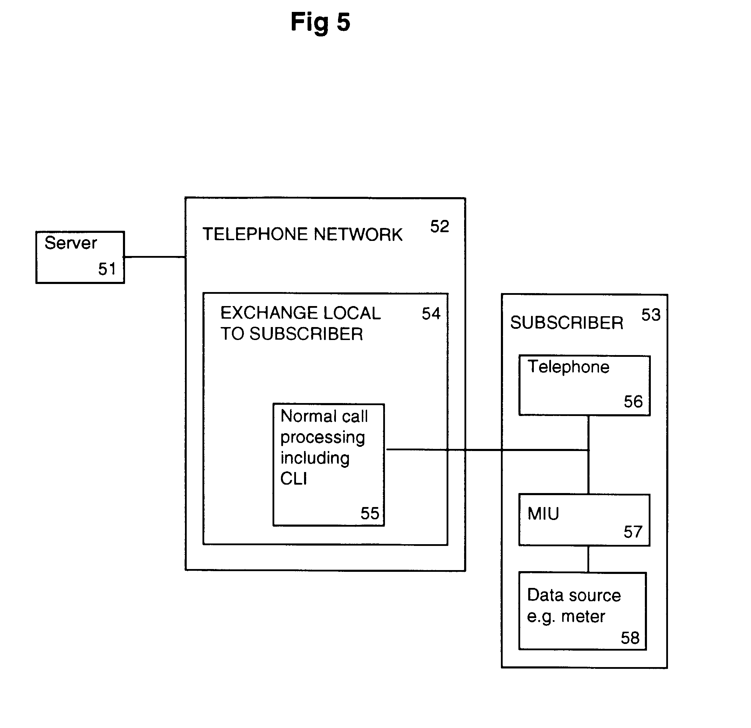

Figure 5 shows a remote access arrangement according to the invention. A server 51 initiates telephone calls through the telephone network 52 to reach a data source, in this case shown at the subscriber's location 53. The network includes an exchange 54 local to the subscriber. Calls from the server are passed to this exchange, and connected with the subscriber using normal call processing functions 55, including CLI.

At the subscriber side, an interface unit MIU, 57 detects whether the calling line identity is a recognised identity, corresponding to the server 51. If not, the call is left for the ordinary telephone 56 to answer. Of course, the interface unit 57 may be on its own dedicated line, instead of sharing a line with the ordinary telephone 56.

If the calling line identity is recognised, the interface unit transmits data from a data source, such as a meter 58, back to the server 51.

In principle, the data could be transmitted as part of a separate phone call, or by a separate route, or even to a different server administered by the same calling party. The data could be transmitted in some other form rather than by the telephone network, eg radio transmission or power line data transmission.

Since CLI is transmitted in various different telephone networks including CATV networks, the interface unit can be arranged to respond to such different protocols, to enable the interface unit to work almost anywhere, without requiring expensive, inflexible changes at the exchange side.

Also, using CLI may be more secure than relying on alert tones alone. Alert tones for meter reading could be triggered by an unauthorised person if they know the corresponding line access numbers. In contrast, using CLI information means the security relies on the calling number not the receiving number. It is easier to control the access to calling number since it is embedded in the network.

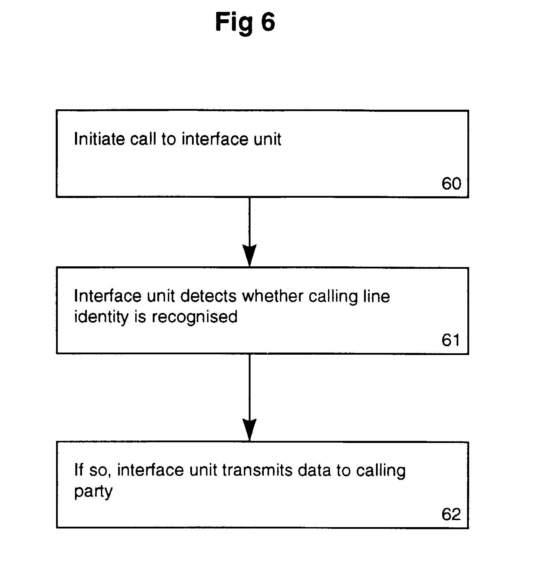

The basic steps for performing a remote access of the data are set out in figure 6. At step 60 a call is initiated to the interface unit. At step 61 the interface unit detects whether calling line identity information is recognised. If so, the interface unit transmits the data to the calling party at step 62. The detailed examples relate to meter reading, but clearly the method is of broader applicability. For example, other household equipment could be monitored periodically for maintenance purposes. Security devices such as cameras and other detectors could be monitored remotely. Integration with home automation systems would be easy to implement.

The interface unit at the data source side will now be described in more detail for the meter reading example. The unit will be connected to the subscriber line using a line interface 40. Tone detect circuitry 41, FSK decode circuitry 42, and DTMF generator circuitry 48 may be the same as those provided in the known subscriber terminal unit described with reference to figure 4. The processor 44 may be the same, though with different or enhanced firmware. The unit will be connected to the meter or meters, and if connected to pulse outputs of a meter, it will maintain a rolling count of the pulses received. The processor 44 may perform a high level of debouncing of the signals, to protect against false triggering within the electrical wiring.

On receipt of a call to the interface unit, it will decode the calling party's CLI and then either answer the call immediately, or allow the call to be handled as a normal telephone call to another telephone set on the same line. The tone detect and FSK decode circuitry in the interface unit function essentially as in the conventional terminal. The processor 44 will then determine if the decoded CLI information from the FSK decoder 42, corresponds to a predetermined calling line identity. A number of such predetermined identities may be set up during configuration of the interface unit. Provision may be made to change these predetermined numbers, or add to them, remotely, perhaps with some form of security, such as password protection, to prevent inadvertent or malicious changes.

Triggered by a recognised CLI, the processor then sends the meter pulse counts to the line using DTMF signalling typically at a rate of 10-30 digits per second. DTMF is capable of transmitting at 50 digits per second. A slower rate enables higher security. This may be required for utility metering where bills will be generated from the data. A defined protocol could be used, or the server could request a particular protocol be used at the time of setting up the meter reading call. DTMF decoding cards or devices for use with personal computers are widely available.

The processor needs to react quickly enough to the CLI information from the FSK decoder, to answer the call, and prevent ringing occurring. The interface unit is also in control of the termination of the call. When it has sent all necessary data, preceded by appropriate headers, and followed by appropriate terminators, the interface unit will return the telephone line to the idle, on-hook, off-line status, ready to receive a further call. Typically, a data transfer may take several seconds to complete, according to how many meters are connected, and according to how many separate counts during separate tariff periods are made for each meter.

If the interface unit fails to recognise the CLI, it will conclude that the call is not a meter reading call, and it will not interrupt the call.

For regulatory requirements, when using a subscriber's telephone line for data reading applications, priority must be given to outgoing telephone calls, eg to permit emergency calls to be made at any time. Therefore the interface unit must detect the occurrence of a phone on the same line going off-hook. In the interface unit, the processor can be arranged to drop the data call using the line interface 40, and restore the line condition to dial tone.

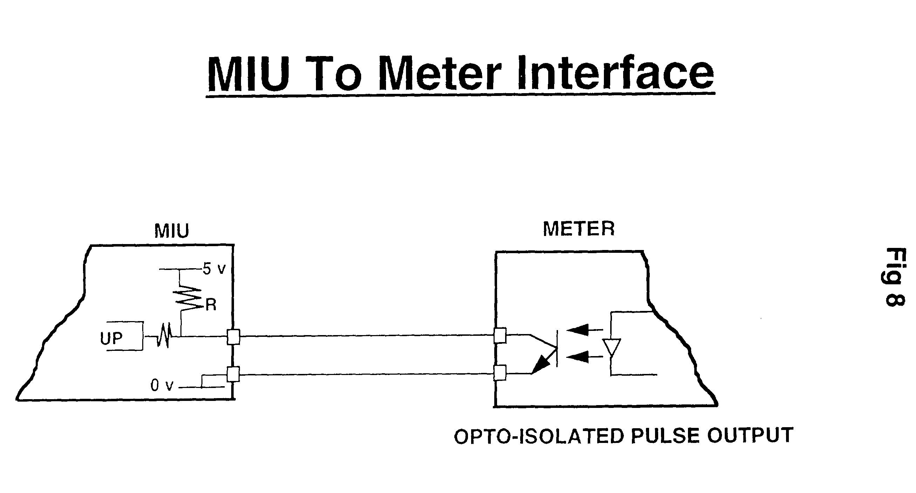

Figure 8 shows a possible interface from the interface unit to the meter. Typically the meter gives an opto-isolated pulse output. One line is fed to ground, in the interface unit, while the other is fed to the micro-processor via a pull up resister R, and a series current limiting resister.

The meter interface unit could be incorporated into a customer's telephone set, to avoid duplication of the line interface, the tone detect circuitry, the FSK decode circuitry, the DTMF generator, and the processor. Only firmware changes, and hardware changes to provide the interface with the meter or meters, would be necessary.

A pulse counter can be implemented in the firmware. No resetting would be needed, the counter can be allowed to wrap around. Tamper proofing features can be provided at the interface unit. Further measures such as fraud detection based on the usage patterns could be incorporated at the interface unit or in the server.

The interface unit can be provided as a separate stand alone item, to plug into the domestic phone socket . It would need no user accessible functions, buttons or display, and could be connected to the meter and be low cost and very unobtrusive. If it were integrated directly into the meter, there would be less opportunity for tampering since the connection between the data source and the telephone interface would be inaccessible. Hardware costs could be reduced.

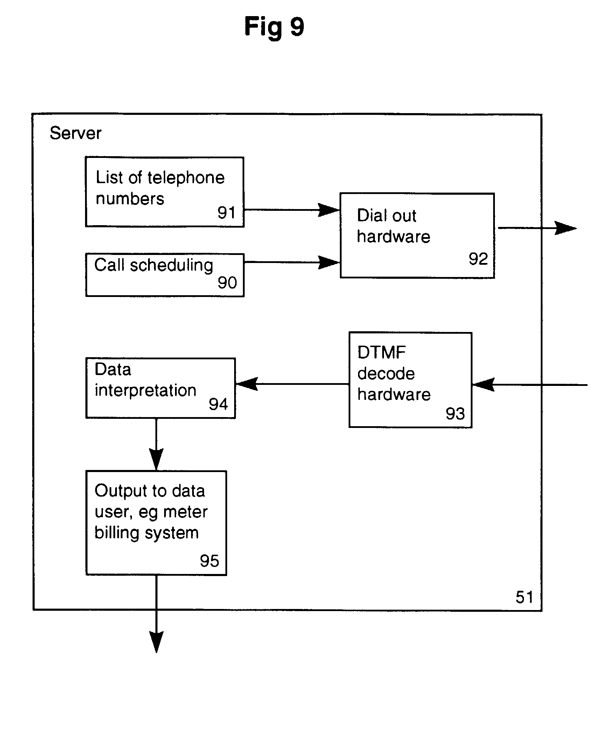

Figure 9 shows in schematic form the basic functions of the server. It may take the form of a personal computer with a facility such as communications cards, for dialling out to the public telephone network, and monitoring DTMF tones on the line, from the interface unit.

For data access applications to monitoring equipment or monitoring security devices, the functions of the server could be incorporated into a mobile phone, and the results of the monitoring could be displayed on the mobile phone. For meter reading applications, it is appropriate to provide a server for many hundreds or thousands of meters. Accordingly, the server needs a list of telephone numbers 91, and a call scheduling function 90, to cycle through the list of numbers on a round robin, or periodic basis. It also needs to be able to manage special one off meter readings, for situations such as moving house. Dial out hardware 92 will be controlled by the call scheduling function 90. DTMF decoding hardware 93 will provide a stream of data corresponding to each successful call. A data interpretation function 94 may also be provided at the server, or elsewhere. Finally, the results of the data interpretation function will be transmitted onwards, for example to a billing system, as shown by item 95.

If the server fails to read a meter in its schedule, it will create a separate list of meters it failed to read. Once it has finished its schedule of meters it will cycle through the list of meters it failed to read earlier, until they are all read, or a time out is triggered. An operator may be alerted of failure to read a meter after repeated attempts.

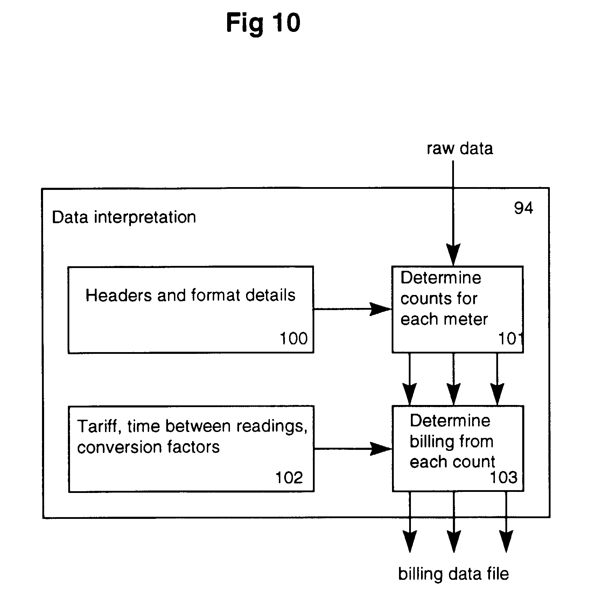

Figure 10 shows the data interpretation function 94 in schematic form in more detail. The raw data from the DTMF decode hardware 93 will contain headers and be in a predetermined format, which may be specific to the subscriber being called, according to how many meters he has connected, and according to which tariff options he may have taken up. Accordingly, header and format details 100 may need to be stored for each subscriber to enable the raw data to be interpreted, to determine at item 101 counts for each meter.

Then, the counts may be converted into a billing data file, or files, to be sent to each utility billing system. Thus, as shown in item 102, it may be necessary to refer to tariff information, times of readings, and conversion factors. Thus the counts may be converted into billable amounts, such as kilowatt hours, or even converted into financial terms, at step 103.

Generally, for the meter reading application, it is preferable if the interface unit performs little processing or conversion of data. It is necessary to store counts of pulses if the telephone line is to be used only sparingly. If conversion and processing is carried out at the server, it is easier to update or change the processing to suit new tariffs or different types of meters, as there will be many more interface units than servers, and it would be more difficult to test any changes made, if the interface units are installed in the field.

Also, it will generally be less expensive to provide more processing power at a central server, than providing it in many distributed interface units.

As well as uploading meter readings, servers could download information to interface units, for example changing times for multiple tariff meters, or for controlling other equipment. Thus the functionality of the interface unit could be used for home automation/control purposes. Since it uses DTMF tones, in common with ADSI (analogue display services interface) equipment, it could be integrated into such systems relatively easily.

Conceivably the interface unit can be arranged to operate with a number of different calling parties and to distinguish between them. Different data may be transmitted depending on which calling party is recognised. For example, different utilities may have their own servers yet use a common interface unit at the users premises. The interface unit could be arranged to send only relevant data to each server.

For home security/home control applications, the fact that data is transmitted only when the CLI is recognised means that the system is inherently secure, without the need for complex security measures such as encrypted passwords. The interface unit could be arranged to receive only from a nominated mobile phone for example, which would act as the server.

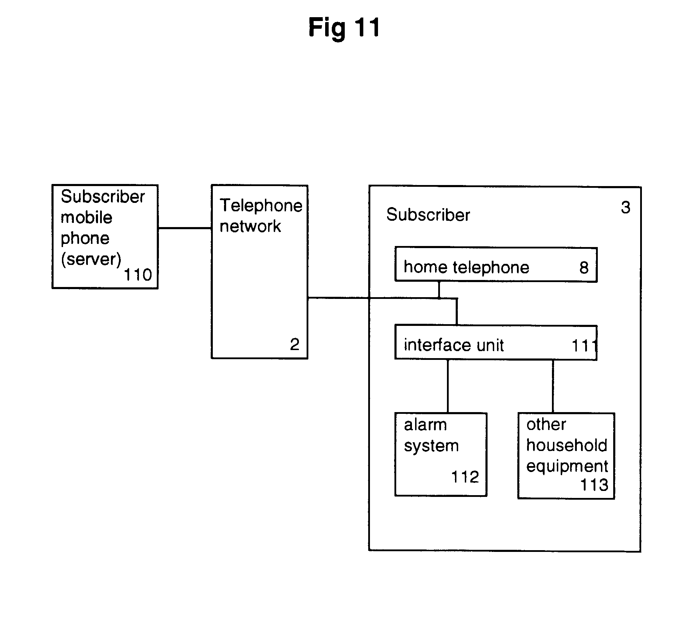

Such a system is shown in figure 11. The phone 110 may be the subscriber's own mobile phone, or a central security office, which would contact the subscriber, or appropriate agencies to deal with anomalous data readings. This office or user's phone 110 initiates data reading calls as described above for meter readings. An interface unit 111 at the subscriber's location, recognises only predetermined CLls corresponding to the security office, or the mobile phone 110 of the user.

In response to the detailed CLI, if authorised, the interface unit sends data from household equipment, or alarm system 112. The data could be received from such equipment in the form of a digital code indicating the status of the equipment. No counter would be needed in the interface unit, though if a counter were to be used, the household equipment could be arranged to provide pulse type data corresponding to meter outputs. The interface unit or the server could be arranged to decode the digital code or the count value, to indicate equipment status.

Other variants will be apparent to a skilled person within the scope of the claims.

## Claims

1. A method of remotely accessing data using a telephone network and an interface unit connecting the telephone network to a source of the data, the telephone network being arranged to send calling line identity information, the method comprising the steps of:
initiating a telephone call from a calling party to the interface unit;
detecting the calling line identity at the interface unit; and
using the interface unit to transmit the data from the source to the calling party in response to the detected calling line identity.

2. The method of claim 1 further comprising the step of answering the call using the interface unit, wherein the data transmitting step is carried out within the same call.

3. The method of claim 1 or 2 wherein ringing is prevented when the call is answered.

4. The method of any preceding claim wherein the data is transmitted from the interface unit to the network using DTMF tones.

5. The method of any preceding claim wherein the calling party comprises a central server, and a plurality of data sources are accessed using different telephone calls in sequence from the calling party.

6. The method of any preceding claim wherein the data relates to household equipment.

7. The method of any preceding claim wherein the source of the data comprises a utility meter.

8. The method of any preceding claim wherein the data comprises data from a plurality of meters.

9. The method of claim 7 further comprising the step of using the interface unit to count pulses from the meter, and the data transmitted comprises counts of the pulses.

10. The method of any preceding claim wherein the interface unit is integrated into a telephone.

11. A method of remotely accessing data using a telephone network and an interface unit connecting the telephone network to a source of the data, the network being arranged to send calling line identity information, the method comprising the steps of:
initiating a call from a calling party to the interface unit;
detecting the calling line identity at the interface unit;
transmitting the data to the calling party using DTMF tones, the data relating to household equipment.

12. A system for remotely accessing data using a telephone network having a calling line identity transmission facility, the system comprising:
a server for initiating a telephone call; and
an interface unit for transmitting the data to the server in response to the telephone call initiated by the server, wherein the interface unit comprises means for detecting calling line identity information relating to the server, and means for transmitting the data in response to the detection.

13. An interface unit for transmitting data over a telephone network having a calling line identity transmission facility, the unit comprising:
means for receiving a telephone call over the network, from a calling party;
means for detecting if a calling line identity associated with the call corresponds to a predetermined calling line identity; and
means for transmitting data to the calling party according to the detection result.

14. A device for remotely accessing data relating to household equipment, transmitted by an interface unit, the device comprising:
means for initiating a telephone call to the household interface unit;
means for receiving the data in the form of DTMF tones transmitted by the interface unit; and
means for interpreting the data according to predetermined criteria.
